# EUROPEAN PATENT APPLICATION

(11) **EP 2 363 978 A1**
(43) Date of publication of application: **07.09.2011**
(21) Application number: 10305228.8
(22) Date of filing: 05.03.2010
(51) Int. Cl.: H04L 12/18

(54) **Method and devices for processing data streams for summary creation**

(71) Applicant: Alcatel Lucent, 75008 Paris (FR)
(72) Inventor: Duval, Fabrice, 29200 Brest (FR); Thomas, Frederic, 29470 Loperhet (FR)
(74) Representative: Brose, Gerhard

(57) **Abstract**

The invention concerns a method for processing a data stream, in particular a media stream in a collaboration tool, wherein upon receipt of a first user input (308) a data element of said media stream is marked (310), in particular as relevant for a summary of said media stream.

## Description

### Field of the invention

The invention relates to a method, a system, a host, a client, a computer program and a computer program product for processing data streams.

### Background

A collaboration tool like the business communications solution Alcatel-Lucent My Teamwork facilitate collaboration of users in different locations using different devices by providing a platform for managing input from and output to said devices. Said collaboration tool may also be adapted to compile a data stream of a meeting held using said collaboration tool in order to give each meeting participant the opportunity to follow the meeting on the respective device, e.g. via a display showing a video of the meeting.

Said data stream may be stored as meeting minutes of a meeting as well.

### Summary

The main idea of the invention is to provide a method for processing a data stream, in particular a media stream wherein upon receipt of a first user input a data element of said media stream is marked as relevant for a summary of said media stream. This way, a user of a collaboration tool can easily select sections of said media stream to create a personal summary.

Advantageously, upon receipt of said first user input, a data element and subsequent data elements of said media streams are marked in particular as relevant for said summary. This way, said first user input starts the recording of a part of said media stream for said summary.

Advantageously, upon receipt of a second user input after said first user input, the marking of said subsequent data elements is stopped. This way, the recording of said part of said media stream is stopped.

Advantageously, said data element is stored in conjunction with a marker in particular marking said data element as relevant for said summary. This way, said summary of said media stream can be edited after said recording of said media stream ended.

Advantageously, said data element is only stored if said first user input is received and discarded otherwise. This way, only data elements relevant for said summary are stored.

Advantageously, a marker is received in particular by said client, a first graphical representation of said data element is displayed next to a second graphical representation of said marker, in particular in a graphical user interface of said client, said data element is marked if said first user input indicates that said second graphical representation was selected and said data element is not marked otherwise. This way, an easy user interface is used to mark said data element.

Further developments of the invention can be gathered from the dependent claims and the following description.

### Brief description of the figures

In the following the invention will be explained further making reference to the attached drawings.
Fig. 1 schematically shows a first part of a communications network.
Fig. 2 schematically shows a first flow chart.
Fig. 3 schematically shows a second flow chart.
Fig. 4 schematically shows a part of a graphical interface display.

### Description of the embodiments

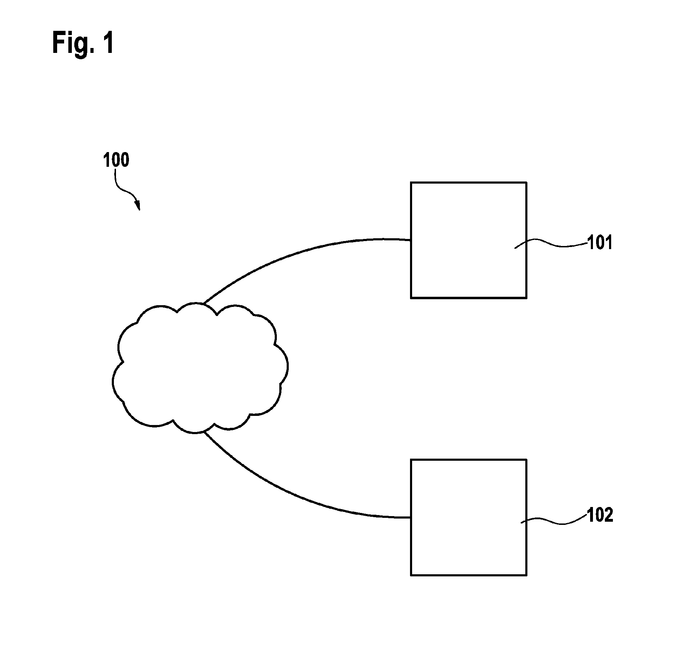

Fig. 1 schematically shows a first part of a communications network 100. Said communications network 100 comprises a host 101, e.g. a server, adapted to execute a collaboration tool like the business communication solution Alcatel-Lucent My Teamwork.

Furthermore said communications network 100 comprises a client 102, e.g. a personal computer executing an application adapted to exchange data with said collaboration tool, a Voice over Internet Protocol phone (well known as VoIP-phone) adapted to exchange data with said collaboration tool, e.g. via a session initiation protocol connection (well known as SIP connection) or any other device capable of exchanging data with said host, e.g. said collaboration tool.

Said host 101 or said client 102 may also be a peer in a peer-to-peer network.

Said host 101 and said client 102 are connected via a data link, for example according to the Internet Protocol Multimedia Subsystem (well known as IMS) or using protocols according to the well known H.323 standard, the Hypertext Transfer Protocol (well known as HTTP) or any other protocol adapted to control or transmit data streams.

Said communications network 100 may also comprise of any other type of fixed line or wireless data link.

Said host 101 and said client 102 are adapted to transmit a first data stream, hereafter labeled media stream.

Any type of data may be transmitted in said media stream, for example video, audio, pictures, documents, e.g. like presentation slides, or instant messages.

Said media stream is for example determined to comprise an overlay of a real time video and audio feed, e.g. from a camera and a microphone connected to said client 102 and a sequence of images of said presentation slide read from a first non-volatile storage connected to said host 101.

Said media stream is determined and transmitted in real time or close to real time.

Said media stream or said data elements are sent between said host 101 and said client 102, e.g. according to the Real-Time Transport Protocol (well known as RTP) and the Real-Time Control Protocol (well known as RTCP).

Alternatively or additionally said media stream may contain data received for example from said client 102, said voice over internet protocol phone, or any of said other devices connected to said communications network 100 and adapted to exchange data with said host 101 or said collaboration tool.

Said media stream is structured as data elements, for example as a sequence of data elements made available over time. Data elements in this example are fixed or variable sized first blocks of data.

A data element of said media stream may comprise a frame of said video encoded for example using the well known H.264 Multimedia Format or a segment of said audio feed encoded for example using the well known G.711 Audio Format.

Said data element may additionally or alternatively comprise an image of a single slide of a presentation or a single picture of a speaker read for example from said first non-volatile storage connected to said host 101.

Said media stream is for example broadcast in said communications network 100 or sand to said client 102.

Additionally said media stream may be sent to said voice over internet protocol phone or said other devices as well. To that purpose said host 101 may be adapted to transmit only parts of said media stream, e.g. only an audio part, to said voice over internet protocol phone or said other devices.

Said host 101 is adapted to send a second data stream, hereafter labeled event stream, for example comprising markers for marking data elements of said media stream. Said markers are for example second data blocks of variable or fixed size.

Said host 101 is adapted to send said event stream or said markers, to said client 102, for example using said Real-Time

Transport Protocol and said Real-Time Control Protocol.

Said host 101 is adapted to determine whether a predetermined event in said media stream occurred.

Predetermined events may include but are not limited to:
- Change of a presentation slide
- Change of topic
- Change of speaker
- Instant messages in particular sent between clients via said host 101
- Start, pause or end of meeting

Said host 101 is adapted to determine said markers depending on said media stream, e.g. depending on the contend of said data element at the time said predetermined event was detected.

Methods for identifying said predetermined events, e.g. depending on slides currently displayed or speakers currently active during a meeting that is held via a collaboration tool include but are not limited to text, picture or voice recognition. Such methods are well known to a person skilled in the art and are not explained further here.

A marker of said event stream may be associated with said data element via a time stamp or an identifier unambiguously identifying said data element.

Said marker is for example a second data block that may comprise said time stamp or said identifier and may comprise a string, for example "relevant for summary" or a picture of a presentation slide or speaker that was derived from said first non-volatile storage or from said media stream.

Said client 102 is adapted to receive said event stream and display a first graphical representation of said data element and a second representation of said marker for example on a graphical user interface.

Said first graphical representation of said first data element is for example a point on a time line running from the start of said meeting to end of said meeting.

Said second graphical representation of said marker is for example said picture of said presentation slide or said speaker that is displayed next to said first graphical representation of said data element on said graphical user interface.

Said client 102 may be adapted to output, e.g. display said video, said document, e.g. said presentation slide, said pictures or playback said audio from said media stream.

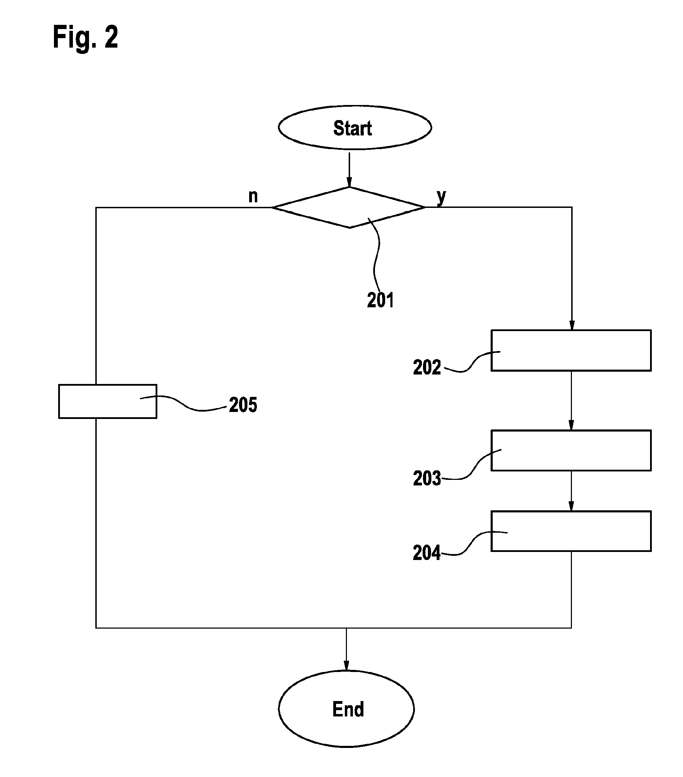

The goal of a first method is to analyze said media stream and send said media stream and said event stream to said client 102. This first method may be implemented on said host 101 and is explained making reference to the flow chart depicted in Fig. 2.

Said first method for example starts upon receipt of a trigger from said client 102 by said host 101. Said trigger is for example a message "Start" generated by said client 102 upon a mouse click performed in a web interface to said collaboration tool hosted on said host 101 and displayed by said client 102.

After the start a step 201 is executed.

In said step 201 it is determined whether said predetermined event occurred or not. For example said data element is compared to a previously received data element to detect whether said data element comprises a different presentation slide or speaker than said previously received data element.

If no predetermined event occurred, a step 205 is executed. Otherwise, a step 202 is executed.

In said step 202, said marker associated with said data element is determined. Afterwards a step 203 is executed.

In said step 203, said marker is associated with said data element for example by using the same time stamp for said data element and said marker. Afterwards a step 204 is executed.

In said step 204, said marker is sent in said event stream and said data element is sent as part of said media stream. Afterwards, said first method ends.

In said step 205, said data element is sent as part of said media stream. Afterwards, said first method ends.

The goal of the second method is to mark said media stream and store said media stream with said marker for a summary during a meeting while data elements are received by said client 102.

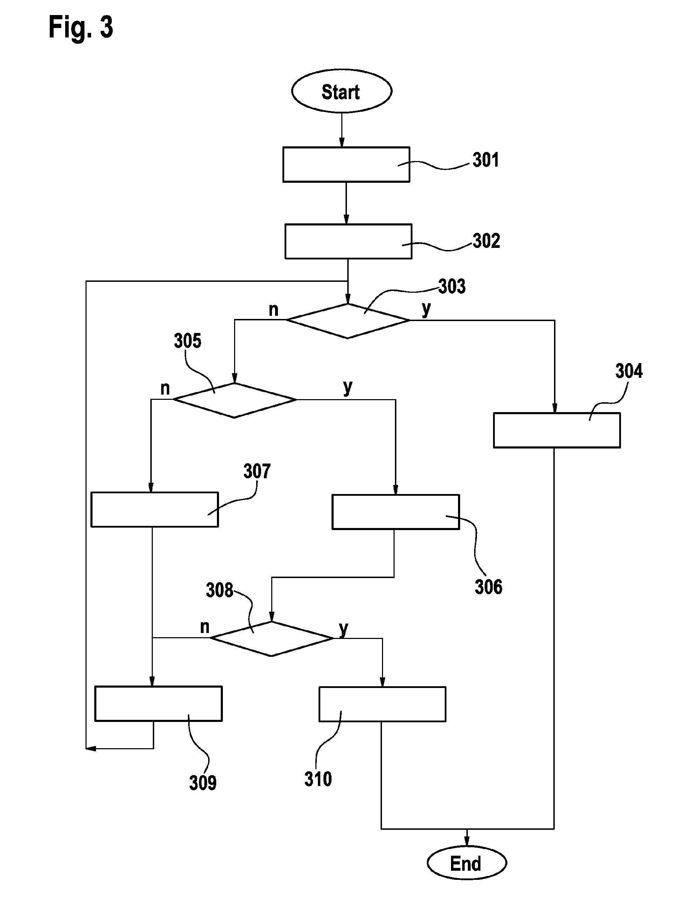

Said second method for example starts upon receipt of said data element and is explained further making reference to the flow chart depicted in Fig. 3.

After the start a step 301 is executed.

In said step 301, said data element is buffered for example in a volatile storage. Afterwards, a step 302 is executed.

In said step 302, a first counter, for example a first timer is initialized, for example set to Zero. Afterwards, step 303 is executed.

In said step 303, a test is performed to check whether said first counter exceeds a first predetermined value, for example 10.

If said first counter exceeds said first predetermined value, the time limit for waiting for an event has expired and a step 304 is executed. Otherwise, a step 305 is executed.

In said step 304 said data element is stored without marking it as relevant for said summary. Said data element is for example stored on a second non-volatile storage connected to said client 102. Afterwards, said second method ends.

Not marking said data element as relevant for said summary for example means, that no additional information is associated with said data element or stored. Alternatively additional information, e.g. a flag indicating that said data element is not relevant for said summary, may be associated to said data element and stored on said second non-volatile storage.

In said step 305, a test is performed to check whether said marker associated with said data element has been received.

If said marker associated with said data element has been received, a step 306 is executed. Otherwise, a step 307 is executed.

In said step 306, said first graphical representation of said data element is displayed next to said second graphical representation of said marker on said graphical user interface. Afterwards, a step 308 is executed.

As an alternative to displaying said second graphical representation next to said first graphical representation, said second graphical representation may be displayed anywhere on said graphical user interface. Said second graphical representation may be linked visually to said first graphical representation on said graphical user interface, for example by a line connecting both, that is displayed on said graphical user interface.

In said step 307, said graphical representation of said data element is displayed on said graphical user interface. Afterwards, a step 308 is executed.

In said step 308, a test is performed to check whether said first user input indicating said selection of said second graphical representation of said marker was received via said input device.

Said first user input may be received by said client 102 via an input devices, like a computer mouse, connected to said client 102.

In case a computer mouse is used, a mouse pointer may be displayed on said graphical user interface. Said selection of said second graphical representation may in this case be detected by said client by matching the position of said mouse pointer to the position of said second graphical representation. Said first user input in this example may be a left mouse click at the time said mouse pointer's position on said graphical user interface and said second graphical representation's position on said graphical user interface match.

If said first user input indicating said selection was received, a step 310 is executed, otherwise a step 309 is executed.

In said step 309, said first counter is increased, for example by 1. Afterwards, said step 303 is executed.

In said step 310, said data element is marked as relevant for said summary, for example by storing said marker and an association of said marker with said data element in a database. Said association may be that both said marker and said data element comprise the said time stamp or said identifier. Additionally, said data element is stored for example on said second non-volatile storage.

This way, all data elements of said media stream are available e.g. for editing even after the transmission of said media stream ended. This way all data elements selected for said summary are marked in said database as relevant.

Executing said step 310 means that said data element is stored in conjunction with said marker, marking it as relevant for said summary. After said step 310 said second method ends.

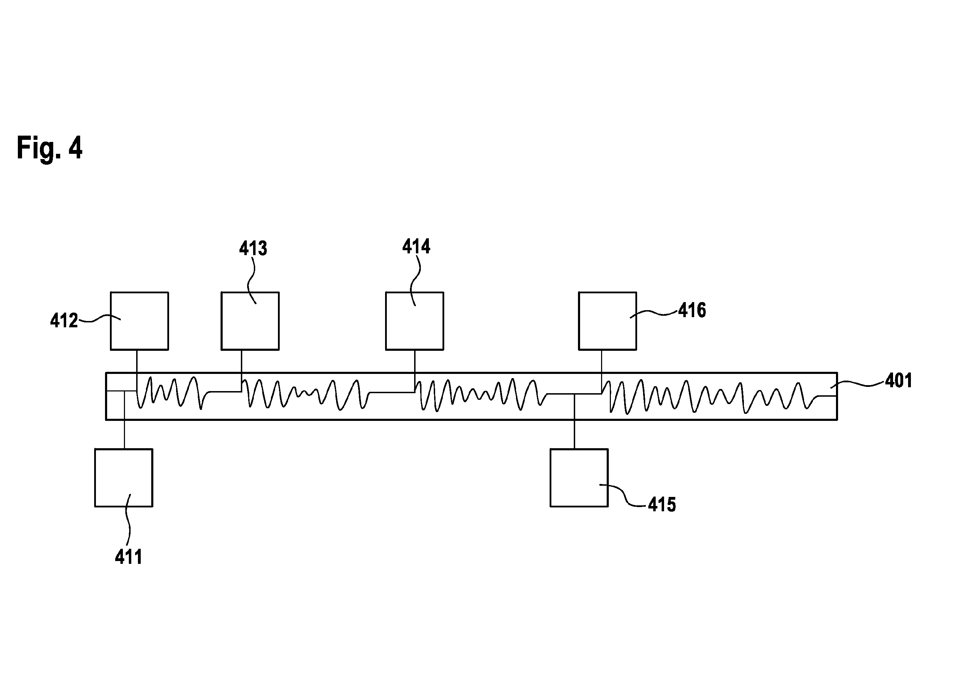

Fig. 4 shows part of a graphical interface display comprising a third graphical representation 401 representing said media stream. Fig. 4 furthermore shows second graphical representations of several events explained further below.

Said third graphical representation 401 of said media stream is for example a sinusoidal representation of an audio signal included in said media stream and displayed over time. The time line of Fig. 4 starts for example on the left-hand side of Fig. 4 by displaying said first graphical representation matching the first of said data elements that was received in said media stream. From left to right said first graphical representations of subsequent data elements are displayed. The third graphical representation 401 ends on the right-hand side of Fig. 4 displaying said first graphical representation of the last of said data elements of said media stream.

A rectangular frame may be displayed around said third graphical representation 401 as depicted in Fig. 4.

According to Fig. 4 pauses in the audio signal are displayed in said graphical representation 401 as flat lined sections located in the center of said rectangular frame.

Alternatively said third graphical representation 401 of said media stream may be depicted as a flat line or as a sequence of the respective data elements.

A first event, for example a first document, e.g. a first presentation slide being opened and displayed during said meeting, is depicted in Fig. 4 as a first square frame 411. Said first square frame 411 is connected via a straight line starting at the first square frame 411 and ending at the third graphical representation 401 at the position at which the data element that matches the time that said first event happened during said meeting is displayed in said third graphical representation 401.

A second event, for example a first speaker starting to speak during said meeting, is displayed in said graphical user interface as a second square frame 412. Said second square frame 412 is connected to said graphical representation 401 of said media stream at the position at which the data element that matches the time that said second event happened during said meeting is displayed in said third graphical representation 401. In this case at the time said sinusoidal representation of said audio recording starts.

A third event, depicted as a third square frame 413, for example a second speaker speaking, and a fourth event, depicted as a fourth square frame 414, for example a third speaker speaking, are displayed in said graphical user interface next to the respective start of said sinusoidal display of said audio recording.

A fifth event depicted as a fifth square frame 415, for example a second slide being displayed during said meeting, is displayed in said graphical user interface next to the corresponding position at which the data element that matches the time that said fifth event happened during said meeting is displayed in said third graphical representation 401. In the example of Fig. 4, said fifth square frame 415 is displayed during the fourth pause of the audio recording of said meeting.

Said third graphical representation 401 of said media stream may be displayed progressively on said graphical user interface and updated as soon as a new data element of said media stream is received by said client 102.

Said square frames of said second graphical representation of events may be displayed on said graphical user interface of said client 102 as soon as the corresponding markers are received in said event stream.

As described above said data element may be marked upon receipt of said first user input, for example a mouse-click performed on said second graphical representation of said marker associated with said data element.

Additionally or alternatively said data element may be marked upon receipt of said first user input, for example said mouse-click performed on said first graphical representation of said data element.

Alternatively, said media stream and said event stream may be recorded by said client 102 e.g. until the meeting ends and may be displayed in said graphical user interface as described above afterwards, e.g. after said meeting ended.

Said client 102 said graphical user interface and said input device may be adapted to allow the selection of multiple data elements, e.g. by selecting areas of said graphical representation 401 of said media stream or multiple instances of said second graphical representation of said markers. This way multiple data elements may be marked as relevant for said summary.

Goal of a modification to said second method is to start marking data elements as relevant for said summary upon said first user input and to stop marking data elements upon a second user input.

Therefore in said modification to said second method, said first user input is interpreted as a start signal, indicating that said data element and all subsequent data elements shall be marked as relevant for said summary until said second user input is received or said media stream ends.

To that end an indicator, e.g. a flag, is defined. Said indicator indicates, e.g. with said flag being set to One, that subsequent data elements shall be marked as relevant for said summary. Said indicator indicates, e.g. with said flag being set to Zero, that no subsequent data elements shall be marked. Said indicator is stored, for example in said second non-volatile storage on said client 102.

Said indicator is initialized e.g. when the first data element of said media stream is received by said client 102. For example said flag is set to Zero at that time.

According to said modification of said second method said indicator, e.g. said flag, is determined in an additional step that is executed after said step 308 and not depicted in Fig. 3.

In said additional step a test is performed to check, whether said first user input or said second user input was received by said client 102.

If said indicator doesn't already indicate that subsequent data elements shall be marked, said first user input was received and said indicator is set to indicate that subsequent data elements shall be marked. This means for example that said flag is set to One. Afterwards said step 310 is executed.

If said indicator indicates that subsequent data elements shall be marked, e.g. said flag is One, said second user input was received, and the marking of said subsequent data elements shall be stopped. Therefore said indicator is set to indicate, that subsequent data elements shall not be marked. This means for example that said flag is set to Zero. Afterwards said method ends.

Furthermore, said step 309 is modified to additionally test whether said indicator indicates that said subsequent data elements should be marked as relevant for said summary or not. For example additionally said flag is tested.

In case said indicator indicates that said subsequent data elements shall be recorded, e.g. said flag is set to One, said step 310 is executed.

Otherwise, said first counter is increased, for example by One. Afterwards, said step 303 is executed.

Alternatively to storing all of said data elements of said media stream, said data element is only stored if said first user input is received and discarded otherwise. This way, storage space can be saved on said client 102.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as client or server, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term client or server should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any data links shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow chart and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for processing a data stream, in particular a media stream, **wherein** upon receipt of a first user input (308) a data element of said media stream is marked (310), in particular as relevant for a summary of said media stream.

2. The method according to claim 1, wherein upon receipt of said first user input (308) a data element and subsequent data elements of said media stream are marked, in particular as relevant for a summary.

3. The method according to claim 2, wherein upon receipt of a second user input after said first user input, the marking of said subsequent data elements is stopped.

4. The method according to claim 1, wherein said data element is stored in conjunction with a marker, in particular marking said data element as relevant for said summary.

5. The method according to claim 1, wherein said data element is only stored if said first user input is received and discarded otherwise.

6. The method according to claim 1, wherein a marker is received, in particular by said client, a first graphical representation of said data element is displayed next to a second graphical representation of said marker in a graphical user interface, said data element is marked if said first user input (308) indicates that said second graphical representation was selected and said data element is not marked otherwise.

7. A system for processing a data stream, in particular a media stream, **wherein** said client (102) and a host (101) are connected via a communications network (100), said host (101) being adapted to upon receipt of a data element of said data stream, determine a marker of said data element in case a predetermined event occurred, in particular in said media stream, and to send said data element and, in case said predetermined event occurred, said marker to said client, said client being adapted to receive said data element and said marker, and to upon receipt of a first user input (308), mark (310) said data element of said media stream, in particular as relevant for a summary of said media stream.

8. A host for processing a data stream, in particular a media stream, **adapted to** upon receipt of a data element of said data stream, determine a marker of said data element in case a predetermined event occurred, in particular in said media stream, and to send said data element and, in case a predetermined event occurred, said marker to said client.

9. A client for processing a data stream, in particular a media stream, **adapted to** receive said data element and a marker, and to upon receipt of a first user input (308), mark (310) said data element of said media stream, in particular as relevant for a summary of said media stream.

10. Said client according to claim 9, adapted to receive a marker, to display a first graphical representation of said data element is displayed next to a second graphical representation of said marker in a graphical user interface, to determine a first user input depending on said first graphical representation or said second graphical representation, to mark said data element if said first user input (308) indicates that said second graphical representation was selected and to not mark said data element otherwise.

11. Said client according to claim 9, adapted to start marking said data element and subsequent data elements upon receipt of said first user input.

12. A computer program for processing a data stream, in particular a media stream, **wherein** said computer program, when executed on a computer, causes the computer to upon receipt of a data element of said data stream, determine a marker of said data element in case a predetermined event occurred, in particular in said media stream, and to send said data element and, in case said predetermined event occurred, said marker to a client, and to receive said data element and said marker, and to upon receipt of a first user input (308), mark (310) said data element of said media stream, in particular as relevant for a summary of said media stream.

13. A computer program product for processing a data stream, in particular a media stream, **wherein** said computer readable program, when executed on a computer, causes the computer to upon receipt of a data element of said data stream, determine a marker of said data element in case a predetermined event occurred, in particular in said media stream, and to send said data element and, in case said predetermined event occurred, said marker to a client, and to receive said data element and said marker, and to upon receipt of a first user input (308), mark (310) said data element of said media stream, in particular as relevant for a summary of said media stream.
